# EUROPÄISCHE PATENTSCHRIFT

(11) **EP 3 683 441 B1**
(45) Veröffentlichungstag und Bekanntmachung des Hinweises auf die Patenterteilung: **28.08.2024**
(21) Anmeldenummer: 19152025.3
(22) Anmeldetag: 16.01.2019
(51) Int. Cl.: F04B 9/04, F04B 27/08, F04B 39/14, F16N 13/10

(54) **MONTAGEEINHEIT ALS BAUGRUPPE FÜR EINE SCHMIERSTOFFPUMPE**
ASSEMBLY UNIT AS ASSEMBLY FOR A LUBRICANT PUMP
UNITÉ DE MONTAGE EN TANT QUE MODULE POUR UNE POMPE À LUBRIFIANT

(43) Veröffentlichungstag der Anmeldung: 22.07.2020
(73) Patentinhaber: Groeneveld-BEKA GmbH, 91257 Pegnitz (DE)
(72) Erfinder: KÖPPEL, Bernhard, 91257 Pegnitz (DE); WITTMANN, Johannes, 91275 Pegnitz (DE)
(74) Vertreter: Meissner Bolte Partnerschaft mbB

(56) Entgegenhaltungen:
- EP-A1- 1 514 774
- EP-A2- 0 340 477
- CN-U- 207 378 468
- DE-A1- 3 221 912

## Beschreibung

Die Erfindung betrifft eine Schmierstoffpumpe mit einer Montageeinheit als zentrale Baugruppe für die Schmierstoffpumpe nach den Merkmalen des Anspruchs 1.

Schmierstoffpumpen, bei denen mindestens ein Pumpenelement durch eine Exzenteranordnung mit einem umlaufenden Exzenter beaufschlagt werden und durch eine Linearbewegung eines Kolbens im Pumpenelement Schmierstoff fördern, sind im Stand der Technik hinlänglich bekannt. Allerdings sind derartige Schmierstoffpumpen meist vergleichsweise aufwendig aufgebaut und unterscheiden sich oftmals je nach konkretem Anwendungsgebiet und je nach konkretem Schmierbedarf. Schmierstoffpumpen werden beispielsweise in Baumaschinen, Landmaschinen, Lastkraftwägen, in bergbautechnischen Anlagen, in industriellen Anlagen oder in Windkraftanlagen zur Versorgung ein oder mehrerer Schmierstellen mit Schmierstoff eingesetzt. In der Regel werden die unterschiedlichen Komponenten der Schmierstoffpumpe relativ zu einem meist aus Metall gebildetem Gehäuse festgelegt und auftretende Kräfte zwischen der Exzenteranordnung und dem Pumpenelement über das bereits erwähnte Gehäuse aufgenommen.

EP 1 514 774 A1 betrifft die Schmierung einer Sattelkupplung zur Montage in einem Zugfahrzeug. Eine Schmierstoffpumpe mit einer Montageeinheit als Baugruppe der Schmierstoffpumpe wird darin nicht beschrieben.

CN 207 378 468 U betrifft eine Schmierstoffpumpe mit einstellbaren Druck, die darauf abzielt, den durch die Schmierstoffpumpe zur Verfügung gestellten Öldruck für die Wiederbefüllung anpassen zu können.

Die Aufgabe der vorliegenden Erfindung besteht ausgehend von diesem Stand der Technik darin, ein hiervon abweichendes Konzept für den Aufbau einer Schmierstoffpumpe vorzuschlagen.

Diese Aufgabe wird in vorrichtungstechnischer Hinsicht durch eine Schmierstoffpumpe umfassend eine Montageeinheit als Baugruppe der Schmierstoffpumpe, wobei die Montageeinheit eine Grundplatte, mindestens ein mit der Grundplatte fest verbundenes Pumpenelementgehäuse, in dem ein durch eine Linearbewegung angetriebenes Pumpenelement eingesetzt ist, und weiterhin eine Exzenterfixierung aufweist, um eine mit einem umlaufenden Exzenter versehene Exzenteranordnung in fester Relativposition zu dem im Pumpenelementgehäuse eingesetzten Pumpenelement montieren zu können, wobei die Exzenterfixierung an der Grundplatte vorgesehen ist, gelöst.

Vorteilhafte Weiterbildungen sind in den Unteransprüchen angegeben.

Eine Kernüberlegung der vorliegenden Erfindung besteht darin, dass eine Grundplatte vorgesehen ist, die sowohl eine Lagerung für das Pumpenelement vorsieht, wobei dieser Lagerung auch als Pumpenelementgehäuse ausgebildet bzw. bezeichnet werden kann und dazu dient, das Pumpenelement relativ zur Grundplatte zu befestigen bzw. festzulegen. Gegenüber der Grundplatte innerhalb der vom Pumpenelement vorgegebenen Grenzen beweglich ist ein vom Pumpenelement umfasster Schmierstoffkolben, der innerhalb des Pumpenelements eine Linearbewegung ausführt und den Pumpvorgang des Schmierstoffs durch das Pumpenelement bewirkt.

Dabei ist der Schmierstoffkolben in einer bevorzugten Ausgestaltung auf einer Achse linear hin- und herbeweglich, die parallel zu einer Ebene der Grundplatte verläuft. In einer bevorzugten Ausgestaltung ist die Grundplatte dabei als planparallele ebene Grundplatte von im Wesentlichen rechteckförmiger Gestalt ausgebildet.

Die Grundplatte nach der vorliegenden Erfindung umfasst weiterhin eine Exzenterfixierung, um die mit einem umlaufenden Exzenter versehene Exzenteranordnung derart befestigen zu können, dass der umlaufende Exzenter rotatorisch beweglich bleibt. In einer bevorzugten Ausgestaltung steht dabei die Drehachse des umlaufenden Exzenters der Exzenteranordnung auf eine Ebene der Grundplatte senkrecht.

Die erfindungsgemäß vorgeschlagene Grundplatte bewirkt, dass die Schmierstoffpumpe modular ausgehend von den zentralen Komponenten heraus aufgebaut werden kann. Ein weiterer Vorteil besteht darin, dass zwischen dem umlaufenden Exzenter der Exzenteranordnung und dem oder den Pumpenelementen auftretende Kräfte direkt und unmittelbar über die Grundplatte aufgenommen werden, so dass über äußere Komponenten wie ggf. ein umschließendes Gehäuse keine Kräfte des Antriebs des oder der Pumpenelemente übertragen werden müssen. Bereits hieraus ergeben sich ganz neue Möglichkeiten hinsichtlich Aufbau und Design eines umschließenden Gehäuses, angefangen von der Materialwahl über die geometrische Ausgestaltung bis hin zu fertigungstechnischen Einsparpotentialen. Beispielsweise können ohne weiteres Kunststoffkomponenten zum Einsatz gelangen oder das umschließende Gehäuse gänzlich aus Kunststoff gebildet sein.

Noch ein weiterer und ebenfalls nicht unbedeutender Vorteil besteht darin, dass die Beabstandung der Lagerung des Pumpenelements bzw. des Pumpenelementgehäuses des Pumpenelements relativ zu einer Exzenterfixierung bzw. relativ zu einer zentralen Achse der Exzenteranordnung exakt - ggf. auch unter Zuhilfenahme einer Positionierungsvorrichtung - vorgegeben sein kann und eine Toleranzaufsummierung, wie sie herkömmlicherweise bei Zusammenfügung einer Vielzahl von einzelnen Elementen gegeben war und insofern insgesamt eine große Varianz der Beabstandung zwischen Pumpenelementgehäuse bzw. Lagerung des Pumpenelements und Exzenterachse in Kauf genommen werden musste, nicht mehr gegeben ist. Insbesondere ergibt sich eine Toleranzunabhängigkeit vom Gehäuse. Durch die Vermeidung der nach dem Stand der Technik gegebenen Toleranzaufsummierung ergibt sich eine deutlich verbesserte Fördergenauigkeit.

Das hier vorgeschlagene technische Konzept einer Grundplatte, die auch hinsichtlich der topologischen Anordnung als auch der Funktion als zentrale Grundplatte bezeichnet werden kann, eröffnet baulich ganz neue Möglichkeiten.

Der Herstellungsaufwand lässt sich reduzieren, da derartige Montageeinheiten in höherer Stückzahl vormontiert werden können. Die relative Positionierung vom Pumpenelement und Exzenteranordnung lässt sich exakter vorgeben. Durch die unmittelbare Kraftübertragung kommen andere Gehäuseformen in Betracht und es können auch hier Material und Herstellungskosten eingespart werden. Dementsprechend wird eine Schmierstoffpumpe umfassend eine Montageeinheit sowie ein Pumpengehäuse, in dem die Montageeinheit aufgenommen ist, beansprucht. In einer vorteilhaften Ausgestaltung kann vorgesehen werden, dass das Pumpengehäuse ganz oder teilweise aus Kunststoff besteht. Insbesondere kann ein zwei- oder mehrteiliges Kunststoffgehäuse in Betracht kommen, in dem die Montageeinheit in geeigneter Weise fixiert wird.

Es ist sowohl möglich, die Lagerung bzw. das Pumpenelementgehäuse an der Grundplatte zu befestigen, beispielsweise auf der Grundplatte zu verlöten, zu verpressen, zu vernieten, zu verschrauben, zu verkrimpen oder in einer anderen gängigen Fügetechnik an die Grundplatte anzuschließen. Alternativ ist es aber auch möglich, die Lagerung für das Pumpenelement bzw. das Pumpenelementgehäuse mit der Grundplatte einstückig auszubilden. Derartige Anordnungen können beispielsweise im Gussverfahren, aber insbesondere auch über additive Fertigungsverfahren nach der Art des 3D-Drucks realisiert werden.

In einer vorteilhaften Ausgestaltung kann die Exzenterfixierung auch eine Mehrzahl von Bohrungen, insbesondere drei Bohrungen umfassen, die zur Aufnahme von Befestigungsbolzen ausgebildet sind, um über die Befestigungsbolzen die Exzenteranordnung in fester Relativposition zum Pumpengehäuse festlegen zu können. Dabei können die Befestigungsbolzen in entsprechende Innengewindebohrungen von feststehenden Bestandteilen der Exzenteranordnung, beispielsweise einer Lagerscheibe eingreifen. Die Wandungen der Bohrung können dabei auch besonders vergütet, beispielsweise gehärtet, mit einer Beschichtung versehen oder es kann auch eine Lagerbuchse in die erwähnte Bohrung eingesetzt sein.

In einer konkret bevorzugten Ausgestaltung ist die Montageeinheit bereits als Einheit ausgebildet, die auch die in fester Relativposition zum Pumpengehäuse angeordnete Exzenteranordnung bereits mit umfasst. In einer bevorzugten Ausführungsform der Erfindung kann die Grundplatte aus Metall gebildet sein und eine Stärke zwischen 1,5 mm und 10 mm aufweisen.

In einer weiterhin bevorzugten Ausgestaltung ist die Grundplatte aus Metall gebildet und ausgebildet, die im Pumpenbetrieb durch den Exzenter ausgeübte maximale Druckkraft Fₘₐₓ aufzunehmen, derart, dass unter Einfluss dieser Kraft Fₘₐₓ eine Veränderung der Distanz zwischen einer zentralen Achse der Exzenteranordnung und dem Pumpenelement in einem distalen Umkehrpunkt weniger als 100 µm, vorzugsweise weniger als 20 µm beträgt. Mit anderen Worten bewirkt die Ausübung dieser Kraft Fₘₐₓ maximal ein Auseinanderdrücken dieser beiden Bezugspunkte von weniger als 100 µm, vorzugsweise weniger als 20 µm. Da im Stand der Technik keine derartig unmittelbare Kraftüberleitung zwischen Exzenteranordnung einerseits und Pumpenelement andererseits bestand, sondern Kräfte oftmals über Gehäuseteile oder zwischenliegende Komponenten mit übertragen wurden, mussten einerseits schon hinsichtlich der Toleranzen eine gewisse Aufsummierung ungünstiger Toleranzgegebenheiten in Kauf genommen werden. Darüber hinaus war die Kraftüberleitung nicht derart unmittelbar, so dass Krafteinleitungen hier eher zu einem Ausweichen der beaufschlagten Komponenten relativ zueinander führte, als dies nach dem Konzept der vorliegenden Erfindung der Fall ist.

In einer bevorzugten Ausgestaltung umfasst die Montageeinheit weiterhin eine an der Grundplatte angeschlossene, drehmomentschlüssig mit der Exzenteranordnung gekoppelte Antriebseinrichtung. Die Antriebseinrichtung kann beispielsweise einen Elektromotor oder einen Hydromotor, die über ein geeignetes Getriebe oder auch getriebefrei an die Exzenteranordnung angekoppelt sind, umfassen. Beispielsweise kann die Antriebseinrichtung einen Elektromotor, dessen Abtriebswelle mit einer Getriebeschnecke gekoppelt ist, die in ein Schneckenrad an der Exzenteranordnung eingreift, umfassen.

In einer möglichen, meist auch bevorzugten Ausgestaltung weist die Grundplatte gerade im Fall nur eines Pumpenelements eine im Wesentlichen rechteckförmige Grundform auf, wobei die längere Seite der Rechteckform parallel zu einer Längserstreckung des in das Pumpengehäuse eingesetzten Pumpenelements verläuft. Sind mehrere Pumpenelemente nebeneinanderliegend in radialer Ausrichtung bezogen auf eine Achse des Exzenters angeordnet, kann sich auch eine Grundplatte empfehlen, in die zumindest grob die Umrissform eines Kreissegments aufweist oder auch eine Kreisscheibe definiert.

Obwohl es theoretisch denkbar wäre, die Montageeinheit schwimmend im Schmierstoff vorzusehen, wird ein bevorzugter Aspekt darin gesehen, dass das Pumpenelementgehäuse 12 mit einer Schmierstoffzuführung beispielsweise aus einer Schmierstoffkartusche zusammenwirken kann und ein Schmierstoffausstoß über eine Schmierstoffausstoßleitung bzw. einen Schmierstoffausstoßkanal erfolgt, so dass die Exzenteranordnung außerhalb des Schmierstoffreservoirs angeordnet ist. Dadurch ergibt sich weniger Totraum im Pumpengehäuse. Bei der Erstbefüllung ergibt sich Schmierstoffeinsparung, da kein herkömmlicherweise vorgesehener Totraum mitbefüllt zu werden braucht. Auch im Betriebszustand kann das komplette Schmierstoffbehältervolumen, insbesondere das komplette Schmierstoffkartuschenvolumen genutzt werden.

In verfahrenstechnischer Hinsicht wird ein Verfahren beschrieben, das die folgenden Schritte umfasst:
- Bereitstellen einer Grundplatte, an der ein Pumpenelementgehäuse befestigt wird oder bereits einstückig angeformt ist und
- Befestigen einer Exzenteranordnung in einer an der Grundplatte vorgesehenen Exzenterfixierung, die vorzugsweise als Bohrung ausgebildet ist.

Die Erfindung wird nachstehend auch hinsichtlich weiterer Merkmale und Vorteile anhand der Beschreibung von Ausführungsbeispielen unter Bezugnahme auf die beiliegenden Zeichnungen näher erläutert. Hierbei zeigen:
- Figur 1: eine Seitenansicht einer Ausführungsform einer Montageeinheit nach der vorliegenden Erfindung;
- Figur 2: die Montageeinheit nach Figur 1 in einer Draufsicht;
- Figur 3: die Montageeinheit nach Figur 1 in einer Ansicht schräg von unten;
- Figur 4: eine schematische Ansicht einer Ausführungsform einer Schmierstoffpumpe nach der vorliegenden Erfindung,
- Figur 5: eine schematische Teilschnittansicht einer modifizierten Ausführungsform einer Montageeinheit nach der vorliegenden Erfindung in Prinzipdarstellung.

Auf einer bei der vorliegenden Ausführungsform ebenen Grundplatte 11, die eine rechteckförmige Gestalt und eine konstante Stärke aufweist, ist zunächst ein Lager zur Lagerung eines Pumpenelements 13 gebildet. Das Lager für das Pumpenelement 13 ist hier konkret als Pumpenelementgehäuse 12 ausgebildet. Innerhalb des Pumpenelementgehäuses 12 ist das Pumpenelement 13 spielfrei gehalten. Innerhalb der Grundplatte 11 ist weiterhin eine Exzenterfixierung 17 vorgesehen, die hier konkret als Bohrung ausgebildet ist, in der eine Antriebswelle 15 einer Exzenteranordnung 14 rotatorisch gelagert ist.

Die Exzenteranordnung 14 weist bei der vorliegenden Ausführungsform die bereits erwähnte Antriebswelle sowie einen drehfest mit der Antriebswelle 15 gekoppelten Exzenter 18 auf. Der Exzenter 18 kann auf einer relativ zur Grundplatte 11 ortsfesten Lagerscheibe 22 gleitend aufliegen und einen Exzenterkörper 23 sowie eine mit Hinterschnitt 24 ausgebildete Exzenterscheibe 25 umfassen.

Ein Übertragungsmittel 16, das hier als Kolben ausgebildet ist, überträgt die Zug- und Druckkraft des Exzenters 18 auf das im Pumpenelementgehäuse 12 untergebrachte Pumpenelement 13. Hierzu weist das als Kolben ausgebildete Übertragungsmittel 16 einen endseitigen Abschnitt 26 auf, der einerseits an der Außenfläche des Exzenters 18 anliegt und andererseits in den Hinterschnitt 24 der Exzenterscheibe 25 eingreift. Dadurch können Zug- und Druckkräfte der Exzenteranordnung 14 auf das als Kolben ausgebildete Übertragungsmittel 16 übertragen werden und das Übertragungsmittel bei Umdrehung des Exzenters 18 zu einer linearen Hin- und Herbewegung veranlasst werden. Diese lineare Hin- und Herbewegung wird über das Übertagungsmittel 16 auf einen Kolben des Pumpenelements übertragen. Das Übertragungsmittel 16 kann aber auch einstückiger Bestandteil des Kolbens des Pumpenelements sein. Die Längserstreckung des als Kolben ausgebildeten Übertragungsmittels 16 verläuft senkrecht zu einer durch die Antriebswelle 15 definierten Achse A und gleichzeitig parallel zur Ebene der Grundplatte 11.

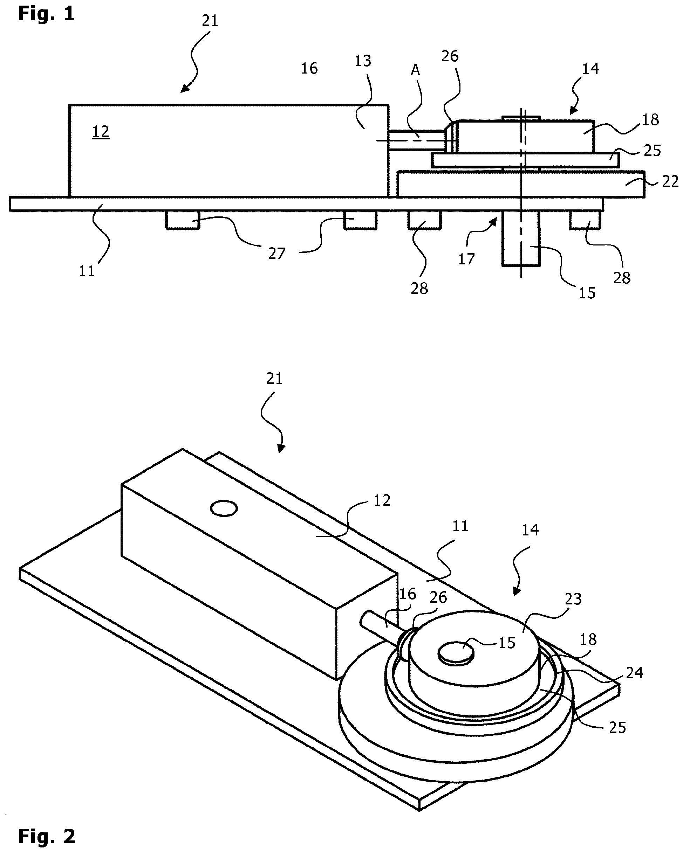

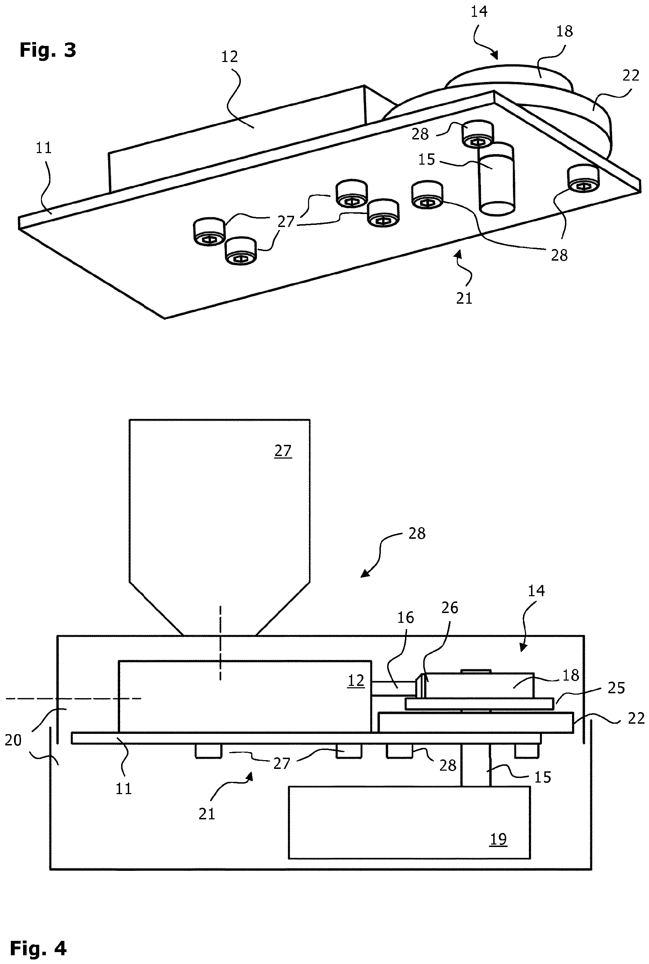

Sowohl das Pumpenelementgehäuse 12 als auch die Lagerscheibe 22 der Exzenteranordnung 14 können über Befestigungsbolzen 27, 28 an der Grundplatte 11 fixiert sein. In den Figuren 2 bzw. 3 ist die bereits anhand der Figur 1 beschriebene Ausführungsform schräg von oben bzw. schräg von unten dargestellt.

In Figur 4 ist eine Ausführungsform einer erfindungsgemäßen Schmierstoffpumpe in schematischer Darstellung veranschaulicht. Die Montageeinheit 21 nach den Figuren 1 bis 3 umfasst hier weiterhin noch eine Antriebseinrichtung 19, die drehmomentschlüssig mit der Antriebswelle 15 verbunden ist. Die die Antriebseinrichtung 19 umfassende Montageeinheit 21 ist in einem hier zweiteilig ausgebildeten Pumpengehäuse 20 aufgenommen. Das Pumpengehäuse 20 kann beispielsweise, da die zwischen Exzenteranordnung 14 und Pumpenelement 13 wirksamen Kräfte vollumfänglich über die Grundplatte 11 übertragen werden, als Kunststoffgehäuse ausgebildet sein. Das im Pumpenelementgehäuse 12 untergebrachte Pumpenelement 13 bezieht den zu fördernden Schmierstoff aus einem Reservoir, das hier als Schmierstoffkartusche 27 ausgebildet sein kann. Die Schmierstoffkartusche 27 kann in einer bevorzugten Ausgestaltung von außen am Pumpengehäuse 20 aufgesetzt sein und eine Schmierstoffzufuhr (nicht gezeigt) kann ausgehend von der Schmierstoff-Kartusche 27 mit dem Pumpenelementgehäuse 12 verbunden sein.

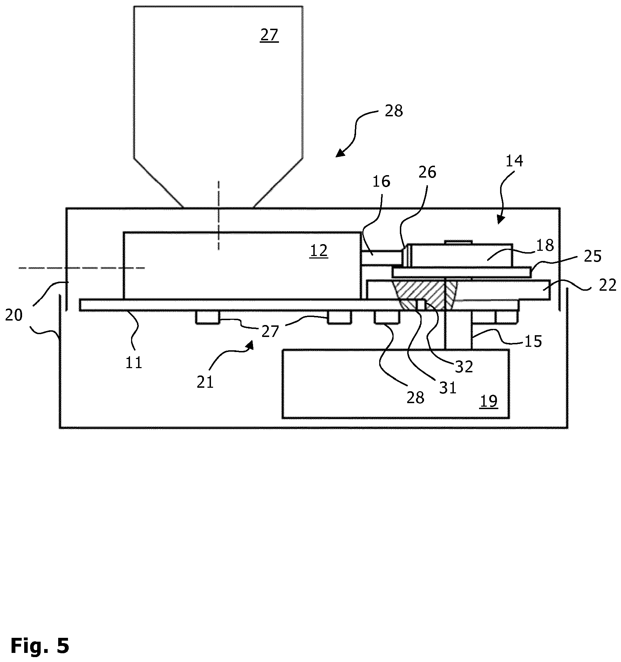

In Figur 5 ist eine modifizierte Ausführungsform einer Montageeinheit in einer Teilschnittansicht in skizzenhafter Darstellung veranschaulicht. Erkennbar wird hier, dass durch die Montage der Lagerscheibe 22 und des Pumpenelementgehäuses 12 auf der Grundplatte 11 die Lage der Bauteile zueinander exakt festgelegt wird. Zur Montage selbst kann eine Positionierungsvorrichtung eingesetzt werden. Bohrungen in der Grundplatte 11, die zum Einsetzen der Befestigungsbolzen 28 ausgebildet sind, bestimmen die Relativposition der Exzenteranordnung 14 zum Pumpenelementgehäuse 12, wobei korrespondierend zu den Bohrungen für die Befestigungsbolzen 28 in der Grundplatte 11 entsprechende Innengewindebohrungen in der Lagerscheibe 22 der Exzenteranordnung 14 vorgesehen sind. Die Lagerscheibe 22 kann dabei mit einer Auskragung in eine entsprechende Ausnehmung eintauchen, wobei zwischen der Auskragung 32 der Lagerscheibe 22 und der Ausnehmung 31 in der Grundplatte 11 ein Radialspiel gegeben ist.

Mit dem hier beschriebenen Montagekonzept für eine Schmierstoffpumpe lässt sich eine hinsichtlich unterschiedlicher Anforderungen leicht anpassbare, äußerst vielseitige Schmierstoffpumpe erstellen, bei der der Montageaufwand aufgrund der Zusammenführung der wichtigsten Komponenten auf einer Montageeinheit 21 deutlich reduziert ist. Darüber hinaus werden die maßgeblichen Kräfte, die zwischen der Exzenteranordnung 14 und dem Pumpenelement 13 wirksam sind, unmittelbar durch die zentral angeordnete Grundplatte 11 aufgenommen, so dass externe Strukturen, wie beispielsweise das Pumpengehäuse 20, diese Funktion der Kraftübertragung nicht länger gewährleisten müssen, was den Herstellungsaufwand weiter reduziert und größere Freiheit hinsichtlich der Ausbildung und Gestaltung der Schmierstoffpumpe ermöglicht.

### Bezuaszeichenliste

- 11: Grundplatte
- 12: Pumpenelementgehäuse
- 13: Pumpenelement
- 14: Exzenteranordnung
- 15: Antriebswelle
- 16: Übertragungsmittel
- 17: Exzenterfixierung
- 18: Exzenter
- 19: Antriebseinrichtung
- 20: Pumpengehäuse
- 21: Montageeinheit
- 22: Lagerscheibe
- 23: Exzenterkörper
- 24: Hinterschnitt
- 25: Exzenterscheibe
- 26: endseitiger Abschnitt
- 27: Befestigungsbolzen
- 28: Befestigungsbolzen
- 29: Schmierstoff-Kartusche
- 30: Schmierstoff-Pumpe
- 31: Ausnehmung (Grundplatte)
- 32: Auskragung (Grundplatte

## Patentansprüche

1. Schmierstoffpumpe umfassend eine Montageeinheit als Baugruppe sowie ein Pumpengehäuse (20), in das die Montageeinheit (21) aufgenommen ist,
wobei die Montageeinheit
- eine Grundplatte (11),
- mindestens ein mit der Grundplatte fest verbundenes Pumpenelementgehäuse (12), in dem ein durch eine Linearbewegung angetriebenes Pumpenelement (13) eingesetzt ist, und
- weiterhin eine Exzenterfixierung (17) aufweist, um eine mit einem umlaufenden Exzenter (18) versehene Exzenteranordnung (14) in fester Relativposition zu dem im Pumpenelementgehäuse (12) eingesetzten Pumpenelement (13) montieren zu können,
wobei die Exzenterfixierung (17) an der Grundplatte (11) vorgesehen ist.

2. Schmierstoffpumpe nach Anspruch 1,
**dadurch gekennzeichnet, dass**
die Exzenterfixierung (17) in vorgegebener Anordnung vorgesehene Bohrungen umfasst, die zur Aufnahme von Befestigungsbolzen (28) ausgebildet sind, um die Exzenteranordnung (14) über entsprechende Innengewindebohrungen in der Exzenteranordnung (14), vorzugsweise in der Lagerscheibe (22) der Exzenteranordnung (14) in vordefinierter Relativposition zum Pumpengehäuse (12) festlegen zu können.

3. Schmierstoffpumpe nach Anspruch 1 oder 2,
**dadurch gekennzeichnet, dass**
die Montageeinheit die in fester Relativposition zum Pumpengehäuse (12) angeordnete Exzenteranordnung (14) mitumfasst.

4. Schmierstoffpumpe nach einem der Ansprüche 1 bis 3,
**dadurch gekennzeichnet, dass**
die Drehachse des umlaufenden Exzenters der Exzenteranordnung auf einer Ebene der Grundplatte (11) senkrecht steht.

5. Schmierstoffpumpe nach einem der Ansprüche 1 bis 4,
**dadurch gekennzeichnet, dass**
die Grundplatte (11) aus Metall gebildet ist und eine Stärke zwischen 1,5 mm und 10 mm aufweist.

6. Schmierstoffpumpe nach einem der Ansprüche 1 bis 5,
**dadurch gekennzeichnet, dass**
die Grundplatte (11) aus Metall gebildet ist und ausgebildet ist, die im Pumpbetrieb durch den Exzenter (18) ausgeübte maximale Druckkraft Fₘₐₓ aufzunehmen, derart, dass unter Einfluss dieser Kraft Fₘₐₓ eine Veränderung der Distanz zwischen einer zentralen Achse der Exzenteranordnung A und dem Pumpenelement in einem distalen Umkehrpunkt weniger als 100 µm, vorzugsweise weniger als 20 µm beträgt.

7. Schmierstoffpumpe, nach einem der Ansprüche 1 bis 6,
**dadurch gekennzeichnet, dass**
die Montageeinheit weiterhin eine an der Grundplatte angeschlossene, drehmomentschlüssig mit der Exzenteranordnung (14) gekoppelte Antriebseinrichtung (19) umfasst.

8. Schmierstoffpumpe, nach einem der Ansprüche 1 bis 7,
**dadurch gekennzeichnet, dass**
die Grundplatte (11) eine rechteckförmige Grundform aufweist, wobei die längere Seite der Rechteckform parallel zu einer Längserstreckung des in das Pumpengehäuse (12) eingesetzten Pumpenelementes (13) verläuft.

9. Schmierstoffpumpe nacheinem der Ansprüche 1 bis 8,
**dadurch gekennzeichnet, dass**
das Pumpengehäuse (20) ganz oder teilweise als Kunststoffgehäuse ausgebildet ist.

10. Schmierstoffpumpe nach einem der Ansprüche 1 bis 9,
**dadurch gekennzeichnet, dass**
die Exzenterfixierung (17) eine Mehrzahl von Bohrungen, insbesondere drei Bohrungen, umfasst, die zur Aufnahme von Befestigungsbolzen (28) ausgebildet sind, um über die Befestigungsbolzen die Exzenteranordnung (14) in fester Relativposition zum Pumpenelementgehäuse (12) festlegen zu können.

## Claims

1. Lubricant pump comprising a mounting unit as an assembly and a pump housing (20) in which the mounting unit (21) is accommodated,
wherein the mounting unit comprises
- a base plate (11),
- at least one pump element housing (12) which is firmly connected to the base plate and in which a pump element (13) driven by a linear movement is inserted, and
- furthermore an eccentric fixing (17) in order to be able to mount an eccentric arrangement (14) provided with a revolving eccentric (18) in a fixed position relative to the pump element (13) inserted in the pump element housing (12), wherein the eccentric fixing (17) is provided on the base plate (11).

2. Lubricant pump according to claim 1,
**characterized in that**
the eccentric fixing (17) comprises bores which are provided in a predetermined arrangement and are designed to accommodate fastening bolts (28) in order to be able to fix the eccentric arrangement (14) in a predefined relative position to the pump housing (12) via corresponding internally threaded bores in the eccentric arrangement (14), preferably in the bearing disc (22) of the eccentric arrangement (14).

3. Lubricant pump according to claim 1 or 2,
**characterized in that**
the mounting unit also comprises the eccentric arrangement (14) arranged in a fixed position relative to the pump housing (12).

4. Lubricant pump according to one of claims 1 to 3,
**characterized in that**
the axis of rotation of the revolving eccentric of the eccentric arrangement is perpendicular to a plane of the base plate (11).

5. Lubricant pump according to one of claims 1 to 4,
**characterized in that**
the base plate (11) is made of metal and has a thickness of between 1.5 mm and 10 mm.

6. Lubricant pump according to one of claims 1 to 5,
**characterized in that**
the base plate (11) is made of metal and is designed to absorb the maximum compressive force Fₘₐₓ exerted by the eccentric (18) during pumping operation, such that, under the influence of this force Fₘₐₓ, a change in the distance between a central axis of the eccentric arrangement A and the pump element at a distal reversal point is less than 100 µm, preferably less than 20 µm.

7. Lubricant pump, according to one of claims 1 to 6,
**characterized in that**
the mounting unit further comprises a drive device (19) connected to the base plate and coupled to the eccentric arrangement (14) in a torque-locking manner.

8. Lubricant pump according to one of claims 1 to 7,
**characterized in that**
the base plate (11) has a rectangular basic shape, wherein the longer side of the rectangular shape extends parallel to a longitudinal extension of the pump element (13) inserted into the pump housing (12).

9. Lubricant pump according to one of claims 1 to 8,
**characterized in that**
the pump housing (20) is designed entirely or partially as a plastic housing.

10. Lubricant pump according to one of claims 1 to 9,
**characterized in that**
the eccentric fixing (17) comprises a plurality of bores, in particular three bores, which are designed to accommodate fastening bolts (28) in order to be able to fix the eccentric arrangement (14) in a fixed position relative to the pump element housing (12) via the fastening bolts.

## Revendications

1. Pompe à lubrifiant comprenant une unité de montage qui forme un module et un corps de pompe (20) dans lequel l'unité de montage (21) est logée,
dans laquelle l'unité de montage comprend
- une plaque de base (11),
- au moins un boîtier d'élément de pompe (12) fixé à la plaque de base, dans lequel est inséré un élément de pompe (13) entraîné par un mouvement linéaire, et
- également une fixation d'excentrique (17) permettant le montage d'une disposition d'excentrique (14) munie d'un excentrique (18) rotatif dans une position relative fixe par rapport à l'élément de pompe (13) inséré dans le boîtier d'élément de pompe (12),
dans laquelle la fixation d'excentrique (17) est prévue sur la plaque de base (11).

2. Pompe à lubrifiant selon la revendication 1, **caractérisée en ce que** la fixation d'excentrique (17) comprend, dans une disposition prédéterminée, des alésages conçus pour recevoir des boulons de fixation (28) permettant de fixer la disposition d'excentrique (14), à l'aide d'alésages taraudés correspondants dans la disposition d'excentrique (14), de préférence dans le disque de palier (22) de la disposition d'excentrique (14), dans une position relative prédéfinie par rapport au corps de pompe (12).

3. Pompe à lubrifiant selon la revendication 1 ou 2, **caractérisée en ce que** l'unité de montage inclut la disposition d'excentrique (14) disposée dans une position relative fixe par rapport au corps de pompe (12).

4. Pompe à lubrifiant selon l'une des revendications 1 à 3, **caractérisée en ce que** l'axe de rotation de l'excentrique rotatif de la disposition d'excentrique est perpendiculaire à un plan de la plaque de base (11).

5. Pompe à lubrifiant selon l'une des revendications 1 à 4, **caractérisée en ce que** la plaque de base (11) est faite de métal et présente une épaisseur comprise entre 1,5 mm et 10 mm.

6. Pompe à lubrifiant selon l'une des revendications 1 à 5, **caractérisée en ce que** la plaque de base (11) est faite de métal et conçue pour absorber la force de pression maximale Fₘₐₓ exercée par l'excentrique (18) pendant le fonctionnement de la pompe, de telle manière que, sous l'influence de cette force Fₘₐₓ, la distance entre un axe central de la disposition d'excentrique A et l'élément de pompe en un point d'inversion distal soit inférieure à 100 µm, de préférence inférieure à 20 µm.

7. Pompe à lubrifiant selon l'une des revendications 1 à 6, **caractérisée en ce que** l'unité de montage comprend en outre une installation d'entraînement (19) raccordée à la plaque de base et couplée à la disposition d'excentrique (14) pour transmettre un couple de rotation.

8. Pompe à lubrifiant selon l'une des revendications 1 à 7, **caractérisée en ce que** la plaque de base (11) présente une forme en plan rectangulaire dans laquelle le grand côté du rectangle est parallèle à la longueur de l'élément de pompe (13) inséré dans le corps de pompe (12).

9. Pompe à lubrifiant selon l'une des revendications 1 à 8, **caractérisée en ce que** le corps de pompe (20) est réalisé entièrement ou partiellement comme un corps en plastique.

10. Pompe à lubrifiant selon l'une des revendications 1 à 9, **caractérisée en ce que** la fixation d'excentrique (17) comprend plusieurs alésages, en particulier trois alésages, conçus pour recevoir des boulons de fixation (28) afin de permettre la fixation de la disposition d'excentrique (14) à l'aide des boulons de fixation dans une position relative fixe par rapport au boîtier d'élément de pompe (12).
